# EUROPÄISCHE PATENTSCHRIFT

(11) **EP 2 254 734 B1**
(45) Veröffentlichungstag und Bekanntmachung des Hinweises auf die Patenterteilung: **26.12.2012**
(21) Anmeldenummer: 09726136.6
(22) Anmeldetag: 27.03.2009
(51) Int. Cl.: B25H 1/00

(54) **BEARBEITUNGSVERFAHREN MIT ELEKTROWERKZEUG**
PROCESSING METHOD USING AN ELECTRIC TOOL
PROCÉDÉ D'USINAGE AVEC UN OUTIL ÉLECTRIQUE

(30) Priorität: 28.03.2008 DE 102008016021
(43) Veröffentlichungstag der Anmeldung: 01.12.2010
(73) Patentinhaber: Marquardt GmbH, 78604 Rietheim-Weilheim (DE)
(72) Erfinder: FUCHS, Andreas, CH-3011 Bern (CH); GANZ, Jochen, CH-8610 Uster (CH)
(74) Vertreter: Otten, Herbert
(86) Internationale Anmeldenummer: PCT/DE2009/000396
(87) Internationale Veröffentlichungsnummer: WO 2009/117994

(56) Entgegenhaltungen:
- EP-A1- 1 586 805
- WO-A2-02/068982
- DE-A1- 10 116 015
- DE-U1-202004 018 003

## Beschreibung

Die Erfindung betrifft ein Verfahren zum Bearbeiten eines Werkteils nach dem Oberbegriff des Patentanspruchs 1 sowie eine dementsprechende Vorrichtung gemäβ dem Oberbegriff des Patentanspruchs 3.

Zum Bearbeiten von Werkteilen in Gebäuden werden Elektrohandwerkzeuge, auch Power Tools genannt, bereits in hohem Ausmaße eingesetzt. Bei dem Werkteil kann es sich um eine Wand, eine Decke, einen Boden o. dgl. des Gebäudes handeln.

Die Bearbeitung solcher Werkteile in Gebäuden erfolgt häufig mittels eines bewegbaren Arbeitsgeräts, das von Hand geführt wird. Der Benutzer bewegt dabei das Arbeitsgerät von Hand zu einer vorgegeben Sollposition. Es ist unmittelbar ersichtlich, daß darunter die Genauigkeit der Bearbeitung leiden kann. Sollen mehrere aufeinanderfolgende Sollpositionen erreicht werden, beispielsweise um ein Lochraster herzustellen, so ist diese Arbeitsweise nicht nur ungenau sondern auch mühsam. Insbesondere ist dabei ein zeitaufwendiges Ausmessen des Arbeitsraumes und/oder des Werkteils erforderlich. Eine Reduktion des Aufwandes bei der Arbeitsvorbereitung ergäbe sich dann, wenn eine benutzerfreundliche Navigation für das Arbeitsgerät das Ausmessen des Arbeitsplatzes weitgehend eliminieren würde.

In der Druckschrift DE 101 16 015 A1, die den Oberbegriff des Anspruchs 1 und des Anspruchs 3 offenbart, wird ein Arbeitsgerät mit einem Abstandssensor als Laserdistanzmesser zur Positionsermittlung beschrieben.

Die Druckschriften DE 20 2004 018 003 Ul sowie WO 02/068982 Al zeigen Arbeitsgeräte, bei denen eine Positionsermittlung mit optischen Methoden vorgenommen wird.

Die Druckschrift EP 1 586 805 A1 zeigt die Überwachung eines Überwachungsbereichs mittels zweier Videokameras, wobei die Bewegungen von Objekten im Überwachungsbereich ermittelt werden.

Der Erfindung liegt die Aufgabe zugrunde, das handgeführte Verfahren zur Bearbeitung von Werkteilen mittels eines bewegbaren Arbeitsgeräts derart weiterzuentwickeln, daß die Arbeit des Elektrowerkzeug-Anwenders erleichtert wird sowie dem Anwender dieser Werkzeuge zusätzlicher Nutzen gebracht wird. Insbesondere soll ein Verfahren zur Bearbeitung von Werkteilen mittels eines bewegbaren Arbeitsgeräts angegeben werden, das mit minimalem apparativen Aufwand eine hohe Genauigkeit sowie insbesondere eine möglichst große Arbeitseinsparung erzielt. Außerdem soll eine dafür geeignete Vorrichtung geschaffen werden.

Diese Aufgabe wird bei einem gattungsgemäßen Verfahren zum Bearbeiten eines Werkteils durch die kennzeichnenden Merkmale des Anspruchs 1 sowie bei einer entsprechenden Vorrichtung durch die Merkmale des Anspruchs 3 gelöst.

Beim erfindungsgemäßen Verfahren wird eine im wesentlichen kontinuierliche Positionserkennung, mittels optischer Methoden, für die jeweilige Istposition des Arbeitsgeräts und/oder eines korrespondierend mit dem Arbeitsgerät bewegbaren Objektes vorgenommen. Die dabei ermittelten Positionsinformationen, wie die Koordinaten der jeweiligen ermittelten Istposition und/oder Informationen zur Abweichung zwischen Soll- sowie Istposition, werden dann dem Benutzer am Arbeitsgerät zur manuellen Positionsführung angezeigt. Es ist somit eine Navigationsmethode zum Arbeiten mit Elektrowerkzeugen in einer Ebene und/oder im Raum geschaffen. Diese Methode erlaubt vorteilhafterweise ein schnelles sowie einfaches Arbeiten in der Ebene und/oder im Raum, beispielsweise beim Bohren von relativ zueinander positionierten Löchern.

In weiterer Ausgestaltung des erfindungsgemäßen Verfahrens werden die jeweiligen Positionsinformationen drahtlos zum Arbeitsgerät übermittelt, womit das Arbeitsgerät uneingeschränkt vom Benutzer handhabbar ist. Sonstige weitere Ausgestaltungen der Erfindung sind Gegenstand der Unteransprüche.

Beim erfindungsgemäßen Verfahrend projiziert das Arbeitsgerät eine Markierung, beispielsweise ein Fadenkreuz, auf das Werkteil. Die Position der Markierung wird, zu einer festen Referenz, mittels wenigstens einer Kamera aufgenommen. Man erhält dadurch eine Art von zweidimensionaler (2D-)Navigation für das Arbeitsgerät. Mittels mehrerer Kameras kann diese Methode zu einer dreidimensionalen (3D-)Navigation erweitert werden. Beispielsweise kann zur Erweiterung in mehrere Dimensionen das Power-Tool in jede Raumrichtung ein Lichtmuster werfen. Mehrere Kameras können von einem Standort aus in mehrere Raumrichtungen spähen, d.h. man kann dann den Ort des Power Tools im Raum statt nur den Ort vor einer Ebene angeben.

In einer anderen Weiterbildung, die nicht unter dem Schutzumfang der Ansprüche fällt, ist eine dreidimensionale (3D-)Navigation dadurch geschaffen, daß das Arbeitsgerät eine passive und/oder aktive Markierung aufweist, und daß mittels wenigstens zweier Kameras die Position der Markierung aufgenommen wird. Die Kameras wiederum sind an einer Basis, beispielsweise einer Basislinie, eines Balkens o. dgl., angeordnet.

In einer anderen Ausgestaltung, die nicht unter dem Schutzumfang der Ansprüche fällt, erfolgt eine dreidimensionale (3D-)Navigation in der Art des "Leuchtturm-Ptinzips". Ein in horizontaler sowie in vertikaler Ebene ausgehend von einer Ausgangsstellung bewegbarer Lichtstrahl wird hierzu von einer Lichtsendestation ausgesandt. Das Auftreffen des Lichtstrahls auf dem Arbeitsgerät wird mittels eines am bzw. auf dem Arbeitsgerät befindlichen Lichtempfängers registriert. Die Entfernung der Lichtsendestation vom Arbeitsgerät kann dann falls erforderlich mittels eines Distanzmessers ermittelt werden. Dann ist mittels der Zeitdifferenz zwischen dem Aussenden des Lichtstrahls in der Ausgangsstellung sowie dem Empfangen des Lichtstrahls am Lichtempfänger und gegebenenfalls mittels der vom Distanzmesser ermittelten Entfernung die Position des Arbeitsgeräts bestimmbar. Zweckmäßigerweise wird als Lichtstrahl ein Laserstrahl verwendet.

In nochmals einer anderen Ausgestaltung, die nicht unter dem Schutzumfang der Ansprüche fällt, ist eine dreidimensionale (3D-)Navigation für das Arbeitsgerät durch Erkennung von Markern geschaffen. Hierzu weist das Arbeitsgerät wenigstens zwei Marker auf. Das Bild der Marker wird mittels einer Kamera aufgenommen, derart daß aus dem aufgenommenen Bild die Position des Arbeitsgeräts bestimmbar ist.

In einer einfach zu realisierenden sowie kostengünstigen Ausgestaltung , die nicht unter dem Schutzumfang der Ansprüche fällt, erfolgt eine zweidimensionale (2D-)Navigation nach der aus der Computertechnik bekannten Art des "Lasermaus"-Prinzips. Hierzu detektiert ein am Arbeitsgerät befindlicher Sensor die Änderungen der Struktur am Werkteil bei Bewegung des Arbeitsgeräts. Aufgrund der detektierten Änderungen der Struktur läßt sich die Relativbewegung des Arbeitsgeräts ermitteln. Der vom Power Tool zurückgelegte Weg und/oder die integrierten Geschwindigkeiten des Power Tools, welche anhand der Relativbewegung bestimmt werden, ermöglichen wiederum die Ermittlung der Positionsinformationen des Arbeitsgeräts.

In einfacher und kostengünstiger Ausgestaltung umfaßt eine Vorrichtung zur Durchführung des erfindungsgemäßen Verfahrens eine optische Strahlung empfangende optische Einheit, die Meßwerte erzeugt. Desweiteren umfaßt die Vorrichtung einen Rechner, der aus den Meßwerten die Positionsinformationen für das Arbeitsgerät berechnet. Schließlich befindet sich eine Anzeigeeinheit am Arbeitsgerät, die die Positionsinformationen dem Benutzer zur manuellen Positionsführung anzeigt.

In einer Weiterbildung der Vorrichtung kann der Rechner zur Berechnung der Positionsinformationen im Arbeitsgerät angeordnet sein. In einer anderen Weiterbildung der Vorrichtung kann der Rechner zur Berechnung der Positionsinformationen extern zum Arbeitsgerät angeordnet sein. In diesem Falle übermitteln zweckmäßigerweise Sender und/oder Empfänger die Positionsinformationen zwischen dem Rechner sowie dem Arbeitsgerät.

Für eine besonders bevorzugte Ausgestaltung der Erfindung ist nachfolgendes festzustellen. Es wird eine Bilderkennung genutzt, um Azimut und Elevation einer vom Elektrowerkzeug in der Achse des Werkzeugs auf die zu bearbeitende Wand projizierten Lichtmarke zu bestimmen, Die radiale Distanz zwischen den Kamera, und der Lichtmarke sowie der Winkel zwischen Blickrichtung der Kamera und der Ebene wird durch ein "Eichkreuz", also ein Lichtmuster mit einer definierten Geometrie, geeicht.

Für Weiterbildungen dieser besonders bevorzugten Ausgestaltung sendet das Bildauswertungssystem die Koordinaten drahtlos auf das Elektrowerkzeug, wo diese auf einem Display dargestellt werden. Die Koordinaten können an einem bestimmten Ort, beispielsweise dem ersten Bohrloch in der Arbeitsfläche, auf Null gesetzt werden, so daß mit Relativkoordinaten gearbeitet werden kann. Wenn das Eichkreuz mit einer Wasserwaage ausgerüstet ist, kann auch die Vertikalrichtung, also parallel zur Gravitation, geeicht werden. Dem Benutzer kann somit angezeigt werden, in welche Richtung die Senkrechte und/oder Waagrechte verläuft. Das Elektrowerkzeug kann mit einer Meßeinrichtung zur Bestimmung des Abstandes zur Arbeitsfläche ausgerüstet sein. Bevorzugt ist die Messung von Distanzen im Zentimeterbereich mittels Ultraschall, was im Falle von Bohrmaschinen beispielsweise die Bestimmung der Bohrtiefe erlaubt. Das System kann so weiterentwickelt werden, daß die bearbeiteten Positionen sich zu dokumentarischen Zwecken aufzeichnen lassen.

Die mit der Erfindung erzielten Vorteile bestehen insbesondere darin, daß das häufig vorkommende Arbeiten in einer Ebene mittels des Arbeitsgeräts erleichtert wird. Vor allem rasterartige Arbeiten sind mit Hilfe des erfindungsgemäßen Verfahrens und/oder der erfindungsgemäßen Vorrichtung in einfacher und kostengünstiger Weise durchführbar. Das vorgeschlagene Verfahren benötigt relativ wenig apparativen Aufwand. Die Eichung kann schnell und unkompliziert vorgenommen werden. Vor Arbeitsbeginn muß lediglich das Eichkreuz in die Arbeitsebene gebracht werden, damit die Kamera und der Bildauswerte-Rechner die Eichung vornehmen kann. Dem Benutzer stehen am Arbeitsgerät anzeigbare Relativkoordinaten zur Verfügung. Folglich muß der Benutzer nicht Rechnen, um die gewünschten Positionen zu finden, sondern kann vielmehr die Maße aus einem vermaßten Plan in einfacher Weise übernehmen.

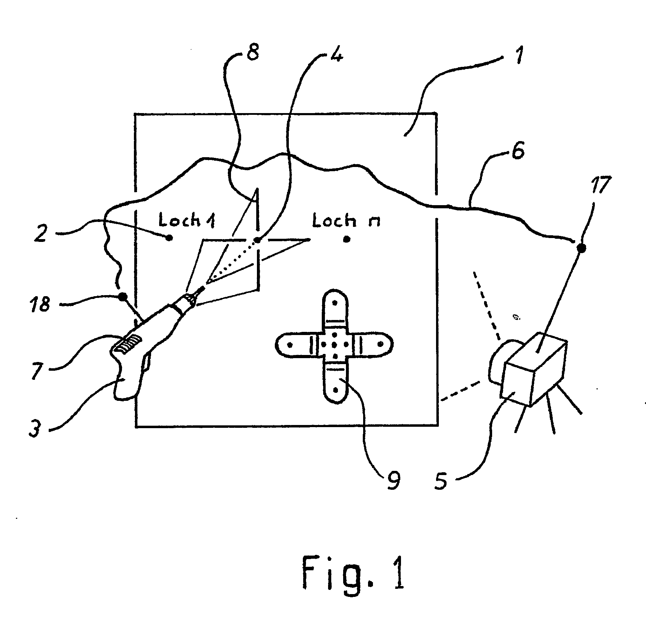

Ein Ausführungsbeispiel der Erfindung ist in der Zeichnung dargestellt und wird anhand Figur 1 näher beschrieben.

Weiterhin zeigen die Figuren 2 bis 5 sowie die dazu gehörigen Beschreibungen Ausführungsvarianten aus dem technischen Bereich der Erfindung, die nicht zur vorliegenden Erfindung gehören.
- Fig. 1: eine Anordnung für die Navigation eines Arbeitsgeräts gemäß einem Erfindungsgemäßen Ausführungsbeispiel position Locator"),
- Fig, 2: eine Anordnung für die Navigation eines Arbeitsgeräts gemäß einem zweiten Ausfllhrungsbeispiel ("Mausprinzip"), das nicht unter dem Schutzumfang der Ansprüche fällt,
- Fig. 3: ein Anordnung für die Navigation eines Arbeitsgeräts gemäß einen dritten Ausführungsbeipiel ("3D-Navigation traditionell mit Triangulation"), das nicht unter dem Schutzumfang der Ansprüche fällt,
- Fig. 4: eine Anordnung für die Navigation eines Arbeitsgeräts gemäß einen vierten Ausführungsbeispiel ("3D-Navigation nach Leuchtturm-Prinzip" , das nicht unter dem Schutzanspruch der Ansprüche fällt, und
- Fig. 5: eine Anordnung für die Navigation eines Arbeitsgeräts gemäß einem fünften Ausführungsbeispiel ("3D Navigation durch Erkennung von Markern" das nicht unter dem Schutzumfang der Ansprüche fällt.

Das Verfahren zum Bearbeiten eines Werkteils 1 wird anhand von Fig. 1 näher erläutert. Bei dem Werkteil 1 kann es sich um eine Wand, eine Decke, einen Boden o. dgl, eines Gebäudes handeln, wobei in das Werkteil 1 an wenigstens einer Sollposition 2 beispielsweise eine Bohrung mittels eines handgeführten, bewegbaren Arbeitsgeräts 3 eingebracht werden soll. Bei dem Arbeitsgerät 3 handelt es sich um ein Elektrowerkzeug, beispielsweise eine Bohrmaschine, eine Schlagbohrmaschine oder einen Bohrhammer. Damit das Arbeitsgerät 3 in die vorgebbare Sollposition bewegbar ist, wird eine im wesentlichen kontinuierliche Positionserkennung für die jeweilige Istposition des Arbeitsgeräts 3 vorgenommen. Hierfür wird ein korrespondierend mit dem Arbeitsgerät 3 bewegbares Objekt 4, wobei es sich bei dem Objekt 4 um einen vom Arbeitsgerät 3 projizierten Lichtpunkt auf dem Werkteil 1 handelt, detektiert. Die Detektion wird mittels optischer Methoden, und zwar hier mit einer Kamera 5 aufgenommen, wobei die Detektierung somit getrennt vom Arbeitsgerät 3 durch die Kamera 5 erfolgt. Die Positionsinformationen, wie die Koordinaten der jeweiligen ermittelten Istposition und/oder Informationen zur Abweichung zwischen Soll- sowie Istposition, werden anhand des von der Kamera 5 aufgenommenen Bildes des Objektes 4 von einem in der Kamera 5 befindlichen Rechner ermittelt und anschließend mittels elektromagnetischer Signale 6 von der Kamera 5 drahtlos zum Arbeitsgerät 3 übermittelt. Die jeweiligen Positionsinformationen werden dann dem Benutzer mittels eines Displays 7 am Arbeitsgerät 3 zur manuellen Positionsführung angeteigt. Die Anzeige kann beispielsweise in einfacher Art und Weise mittels Absolutkoordinaten, Differenzkoordinaten, Richtungspfeile o. dgl. erfolgen. Mittels Richtungspfeile kann dem Benutzer in einfacher Weise signalisiert werden, in welche Richtung das Arbeitsgerät 3 zum Erreichen der Sollposition 2 zu bewegen ist. Desweiteren kann die Länge der Richtungspfeile den momentanen Abstand der Ist- von der Sollposition symbolisieren.

Ebenfalls ist in Fig. 1 als Weiterbildung eine zweidimensionale (2D-)Navigation in der Art eines "Position Locators" für das Arbeitsgerät 3 gezeigt. Das Arbeitsgerät 3 projiziert eine Markierung, und zwar anstelle des Lichtpunkts 4 ein Fadenkreuz 8 bzw, ein Lichtkreuz auf das Werkteil 1. Die Position der Markierung 8 wird im Hinblick auf eine feste Referenz 9, bei der es sich um ein vorab am Werkteil 1 befestigtes sowie entsprechend ausgemessenes Referenzkreuz handelt, mittels wenigstens einer Kamera 5 aufgenommen. Wie bereits erwähnt, kann mittels weiterer, insoweit nicht gezeigter Kameras diese Methode zu einer dreidimensionalen (3D-)Navigation erweitert werden.

Das Position Locator-Verfahren eignet sich besonders für das Anbringen von mehreren, in der Ebene, wie einer Wand, einem Boden, einer Decke, befindlichen Bohrlöchern, die einen bestimmten relativen Abstand zueinander aufweisen sollen, wie nachfolgend näher erläutert wird. Die Relativ-Koordinaten werden dabei beispielsweise relativ zum ersten Loch bestimmt. Neben dieser häufigen Anwendung "Lochrnuster bohren und/oder bearbeiten" eignet sich die Methode Position Locator auch, um Kurven mit dem Arbeitsgerät 3 zu fahren, beispielsweise beim Sägen oder Schleifen.

Die Idee besteht nun darin, daß das Power-Tool 3 ein Lichtmuster 8 auf eine Ebene 1 projiziert. Die Position dieses Lichtmusters 8 kann von einer digitalen Kamera 5 mittels Bildauswertung durch einen Rechner auf bearbeiteter Ebene 1 im Bild erkannt werden. Die digitale Kamera 5 beobachtet die ebene Werkfläche 1. Auf einem Industrierechner läuft ein Bildverarbeitungsprogramm, welches das, Kamera-Bild auswertet. Die Distanz-, Längen - und/oder Verzerrungs-Eichung des von der Kamera 5 gesehenen Bildes geschieht unter Zuhilfenahme eines Kreuzes 9 mit Wasserwaage. Das Kreuz 9 ist mit Lichtquellen und/oder optischen Markern ausgerüstet, deren relative Position dem Industrierechner bekannt ist. Von der Bohrmaschine 3 aus projizieren Laser ein Fadenkreuz 8 nach vom auf die Wand 1. Der Schnitt des Fadenkreuzes 8 liegt auf der Bohrerachse. Die Bohrmaschine 3 erhält von der Kamera 5 und dem Industrierechner drahtlos die Information, wo im Bild sich das Fadenkreuz 8 befindet. Dem Benutzer wird die Koordinate auf einem Display 7, beispielsweise am vorderen Handgriff der Bohrmaschine 3, mitgeteilt. Der Bohrmaschinen-Benutzer setzt die Bohrmaschine 3 bei Loch 1 einer Serie von Löchern an die Wand 1 an und setzt die Koordinaten durch Druck auf einen Knopf der Bohrmaschine 3 auf Null. Wird die Bohrmaschine 3 bewegt, so verändern sich die auf dem Display 7 auf der Bohrmaschine 3 angezeigten Koordinaten, und zwar die Relativ-Koordinaten mit Nullpunkt erstes Bohrloch. Zur Bohrloch-Tiefenmessung ist die Bohrmaschine 3 mit einer Ultraschall-Abstands-Messung zur Wand 1 ausgerüstet. Daraus ergibt sich die Wirkung, daß Loch zwei bis Loch n relativ zu Loch 1 sehr schnell gesetzt werden können, ohne daß ein Meßband benutzt werden muß. Auf dem Display 7 kann man zusätzlich noch die Bohrlochtiefe ablesen. Dank der Wasserwaage ist die Vertikale auch definiert, wobei die Arme des Kreuzes 9 genügend lang sein müssen, d.h. es können schnell vertikale und horizontale Lochreihen gebohrt werden.

In Fig. 1 ist dieses Verfahren zum effizienten Bohren von Loch-Mustern dargestellt. Die Kamera 5 überträgt drahtlos die erkannte Position des Power-Tools 3 auf das Power-Tool 3. Dieses zeigt dem Benutzer die Koordinaten relativ zum Loch 1 an. Geeicht wird die Anlage mittels eines Eichkreuzes 9.

Bei dem Position Locator-Verfahren ergeben sich folgende Vorteile;
- Es ist keine Sichtlinie zwischen der als Referenz-Station dienenden Kamera 5 und dem Power-Tool 3 selber notwendig, sondern nur zwischen der Referenz-Station und dem Lichtmuster 8 auf der Wand 1 vor dem Power-Tool 3.
- Der Benutzer muß nur eine Referenz-Station aufstellen, nicht mehrere.
- Der Benutzer kann auf der Bohrmaschine 3 die Position ablesen. Er muß nicht Koordinaten in die Referenz-Station einprogrammieren, sondern er kann seine Pläne lesen und arbeiten wie bisher.
- Eine Bohrlochtiefenmessung kann ergänzend hinzugefügt werden.

Zwar setzt dieses 2D-Mothode voraus, daß die Ebene 1, also die Wand, der Boden oder die Decke, nicht gebogen ist. Eine Biegung kann jedoch durch Eichung mittels des Eichkreuzes 9 ausgemessen werden.

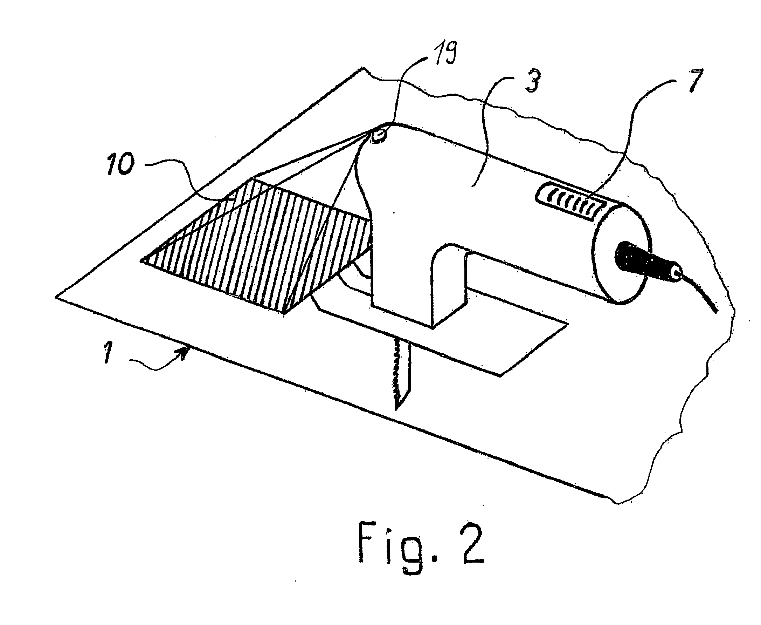

In Fig. 2 ist als eine andere Weiterbildung die nicht unter dem Schutzumfang der Ansprüche fällt, eine zweidimensionale (2D-)Navigation in der Art einer "optischen Maus" oder "Laser-Maus" (Computermaus), welche selbst auf Oberflächen mit minimalster Struktur 10 funktionieren, für das beispielsweise als Stichsäge ausgebildete Arbeitsgerät 3 gezeigt.

Die Methode der 2D-Navigation für das Power-Tool 3 nach dem "Mausprinzip" ist geeignet in einer Ebene 1, wie beispielsweise an Wänden, Decken, Fassaden o. dgl., mit minimaler Struktur 10. Die Relativ-Koordinaten können relativ zum ersten Loch ermittelt werden. Häufige Anwendungen sind Lochmuster bohren und/oder bearbeiten oder Kurven fahren, beispielsweise zum Sägen oder Schleifen. Die Idee besteht darin, daß das Power-Tool 3 die Struktur 10 der Wand 1 periodisch beobachtet und aus der Änderung des Bildes und/oder Signals die Verschiebung in x- und/oder y-Richtung berechnet, d.h. die Muster-Erkennung im Bild erlaubt die Geschwindigkeits- oder Weg-Messung.

Ein mit dem Power-Tool 3 verbundener Sensor 19 fährt in konstantem Abstand über die zu bearbeitende Ebene 1. Die Relativbewegung des Power-Tools 3 zur Wand 1 wird aus dem Bild herausgemessen. Die Koordinaten können an beliebigen Orten null gesetzt werden, so daß das Messen von Abständen ohne Kopfrechnen möglich ist. Ähnlich wie bei einem GPS-System Wegpunkte gesetzt werden können, können auch hier Trajektorien definiert werden. Man kann dann beispielsweise entlang dieser Trajektorien sägen. In Fig. 2 ist die Funktionsweise näher zu sehen, nämlich das Power-Tool 3 mißt entweder Distanzen zwischen erkennbaren Mustern bzw. Strukturen 10 und berechnet so den in der Ebene 1 zurückgelegten Weg oder es mißt die Geschwindigkeit und integriert diese auf, um so den entsprechenden Weg zu berechnen. Der Rechner zur Berechnung der Positionsinformationen ist hier im Gegensatz zur Vorrichtung nach Fig. 1 nicht extern zum Arrbeitsgerät 3 angeordnet sondern vielmehr im Arbeitsgerät 3 befindlich. Damit erübrigt sich in diesem Fall die drahtlose Übertragung der Positionsinformationen auf das Arbeitsgerät 3.

Bei diesem Verfahren ergeben sich folgende Vorteile:
- Es ist keine externe Referenzstation notwendig, d.h. diese Methode ist nicht auf eine freie Sichtlinie angewiesen.
- Die Methode ist einfach in der Anwendung.
- Es sind keine geräteexternen Accessoires notwendig.

Da das Power-Tool 3 sich entlang der Oberfläche bewegen muß, ist diese Methode besser für Arbeiten am Boden als an Decke und/oder Wand geeignet. Falls Staub auf dem Sensorfenster am Power-Tool 3 für die Abdeckung des im Inneren des Power-Tools 3 befindlichen Sensor 19 ein Problem darstellen sollte, ist dieser Staub geeignet zu entfernen, beispielsweise mittels eines vom Lüfter im Power-Tool 3 erzeugten Luftstroms.

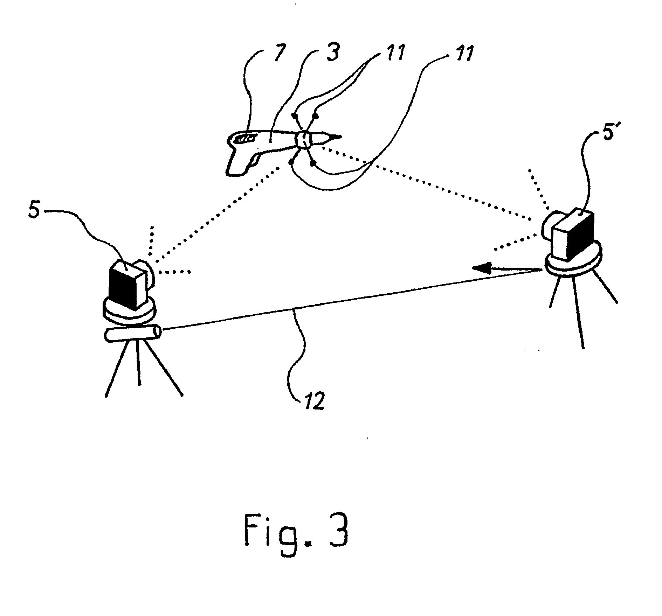

In Fig. 3 ist als noch andere Weiterbildung die nicht unter dem Schutzumfang der Ansprüche fällt, eine dreidimensionale (3D-)Navigation in "tradioneller" Art dargestellt. Das Arbeitsgerät 3 weist eine Markierung 11, die passiv und/oder aktiv ausgestaltet sein kann, auf. Mittels wenigstens zwei Kameras 5, 5' wird die Position der Markierung 11 aufgenommen. Die beiden Kameras 5, 5' sind an einer Basis 12, die aus einer Basislinie, einem Balken o. dgl. bestehen kann, angeordnet, so daß aufgrund des Bildes der Markierung 11 in den Kameras 5, 5' die Koordinaten der Position des Arbeitsgeräts 3 berechnet werden können.

Die Methode der "3D-Navigation traditionell mit Triangulation" ist zur dreidimensionalen Navigation in einem Raum geeignet. Sie kommt zur Anwendung für eine absolute, d.h. relativ zur Basislinie und/oder zur Referenzstation, Navigation in einem Volumen. Die Idee besteht darin, daß zwei Kameras 5, 5', die auf einer Basislinie 12 aufgestellt oder an einem Balken montiert sind, das Power Tool 3 bzw. passive und/oder aktive Marker 11 auf dem Power-Tool 3 beobachten.

Die Kameras 5, 5' erkennen die Marker 11 am Power-Tool 3. Das Power-Tool 3 befindet sich dort, wo die Sichtlinien von den Kameras 5, 5' zum Power-Tool 3 den minimalen Abstand haben. Es können auch die Verzerrung und die Größe des Marker-Bildes ausgewertet werden, um beispielsweise die Lage des Power-Tools 3 im Raum zu bestimmen. In Fig. 3 ist die klassische Triangulation im Raum, bei welcher die Winkel mittels Bilderkennung bestimmt werden, näher dargestellt.

Es ist bei dieser Methode noch zu berücksichtigen, daß die Kantenlänge des Arbeitsvolumens kleiner ist als die Basislinie 12 lang ist. Anders ausgedrückt, für große Arbeitsvolumen ist eine lange Basislinie 12 notwendig. Das Erstellen einer Basislinie 12 erfordert zwar etwas mehr Aufwand als das Positionieren einer einzigen Basis- bzw. Referenzstation, jedoch ist vorteilhaft, daß die Methode sehr genau arbeitet.

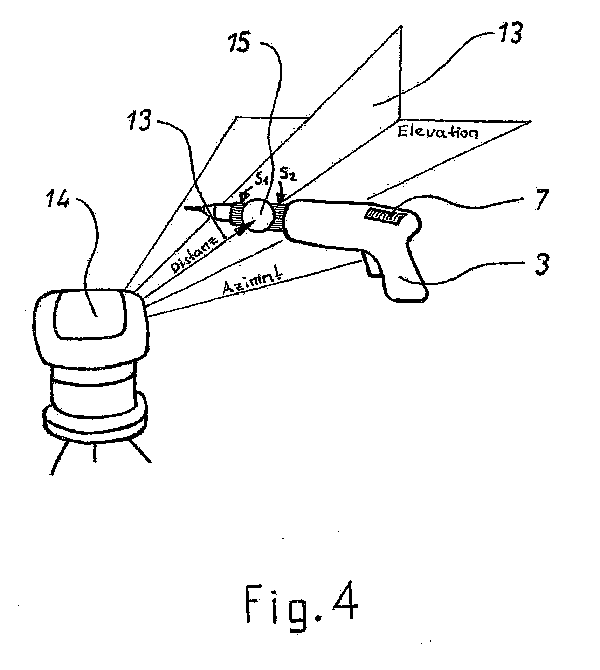

In Fig. 4 ist als nochmals andere Weiterbildung, die nicht unter dem Schutzumfang der Ansprüche fällt, eine dreidimensionale (3D-)Navigation nach dem "Leuchtturm-Prinzip" dargestellt. Von einer Lichtsendestation 14 wird ein in horizontaler sowie in vertikaler Ebene ausgehend von einer Ausgangsstellung bewegbarer Lichtstrahl 13 ausgesandt. Bei der Lichtsendestation 14 handelt es sich zweckmäßigerweise um einen Laser, womit der Lichtstrahl 13 von einem Laserstrahl gebildet ist. Das Auftreffen des Lichtstrahls 13 auf dem Arbeitsgerät 3 wird mittels eines am Arbeitsgerät 3 befindlichen Lichtempfängers 15 registriert. Gegebenenfalls kann noch die Entfernung der Lichtsendestation 14 vom Arbeitsgerät 3 mittels eines Distanzmessers ermittelt werden. Dadurch ist mittels der Zeitdifferenz zwischen dem Aussenden des Lichtstrahls 13 von der Lichtsendestation 14 in der Ausgangsstellung sowie dem Empfangen des Lichtstrahls 13 am Lichtempfänger 15 und gegebenenfalls mittels der vom Distanzmesser ermittelten Entfernung die Position des Arbeitsgeräts 3 bestimmbar.

Die Methode der "3D-Navigation nach dem Leuchtturm-Prinzip" ist zur dreidimensionalen Navigation in einem Raum geeignet. Sie kommt zur Anwendung für die absolute Navigation in einem Volumen, beispielsweise dargestellt durch Kugel-Koordinaten mit der Basisstation 14 als Zentrum. Die Idee besteht darin, das Prinzip von Leuchttürmen zur Navigation für das Power-Tool 3 zu verwenden. Ein Winkel wird indirekt über die Zeit gemessen, die von der Ausgangsstellung bis zum Auftreffen auf dem Lichtempfänger 15 vergangen ist. Dies wird wiederum benutzt, um Azimut und Elevation des Power-Tools 3 aus der Sicht einer Basisstation 14 zu messen. Die Radialdistanz zwischen Basisstation 14 und Power-Tool 3 wird aus einer Ultraschall- oder Laser-Distanzmessung erhalten. Die Koordinaten werden drahtlos auf das Power-Tool 3 übermittelt und können auch als kartesische Koordinaten auf dem Display 7 angezeigt werden.

Ein Laser-Sheet 13 kreist um eine vertikale Achse der Lichtsendestation 14. Das Power-Tool 3 erkennt das Vorbeistreichen des vertikalen Laser Sheets 13. Aus der Zeitdifferenz zwischen einem Lichtpuls oder Radioimpuls (Zeit t_{A} = 0) und der Zeit des Vorbeistreichens des Laser-Sheets 13 kann dank bekannter Kreisgeschwindigkeit der Azimutwinkel berechnet werden. Senkrecht zum vertikalen Laser-Sheet der oben erwähnten, vertikalen Achse wackelt bzw. wobbelt ein Laser-Sheet 13 (horizontal) auf und ab. Eine Zeitdifferenz zwischen einem anderen Lichtpuls oder einem anderen Radioimpuls (Zeit t_{E} = 0) und dem Vorbeistreichen des Laser-Sheets 13 erlaubt die Berechnung des Elevationswinkel. Ein Distanzmesser schaut in die Richtung, welche durch Azimut und Elevation gegeben ist und mißt die Distanz zum Power-Tool 3. Will man an einer Wand 1 arbeiten, kann man durch Setzen von drei Punkten die Ebene dieser Wand 1 definieren. Die Software wiederum sollte erlauben, in dieser Ebene 1 Linien zu definieren.

In Fig. 4 ist dargestellt, daß Sensoren 15 auf dem Power-Tool 3 erkennen, wann die Laser-Sheets 13 vorbeistreichen. Dies erlaubt die Bestimmung von Azimut- und ElevationsWinkel. Ein Tracking-System folgt der Reflektorkugel 15 und mißt die radiale Distanz zwischen Basisstation 14 und Reflektorkugel 15 mittels Laser.

Zu beachten ist bei dieser Methode, daß die Zeitauflösung umso besser ist, je öfter die Laser-Sheets 13 vom Power-Tool 3 gesehen werden können. Gegebenenfalls sind auf dem Power-Tool 3 noch gut reflektierende Flächen notwendig. Eventuell kann das zweite, auf und ab wobbelnde, horizontale Laser-Sheet 13 durch einen optischen Tracker ersetzt werden.

Bei diesem Verfahren ergeben sich folgende Vorteile:
- Es ist keine Basislinie sondern lediglich eine Basisstation 14 notwendig.
- Es wird nur ein Zusatzgerät, nämlich die Basisstation 14 benötigt.

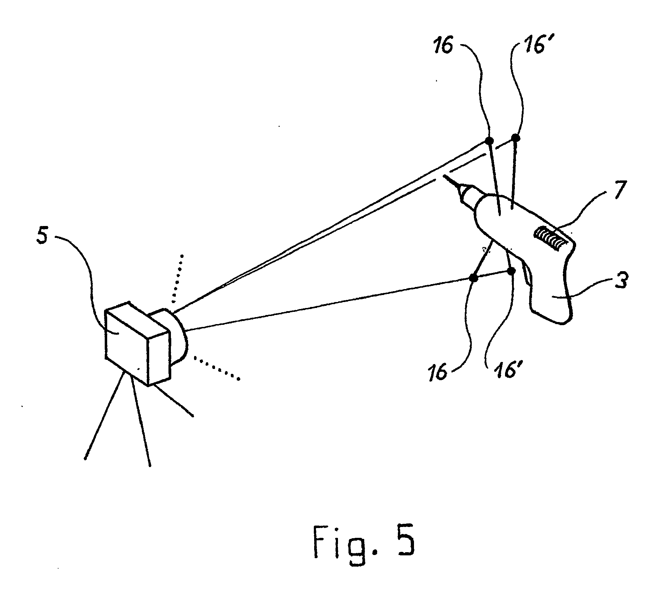

In Fig. 5 ist schließlich als wiederum andere Weiterbildung, die nicht unter dem Schutzumfang der Ansprüche fällt, eine dreidimensionale (3D-) Navigation durch "Erkennung von Markern" dargestellt. Hierfür weist das Arbeitsgerät 3 wenigstens zwei Marker 16, 16' auf. Das Bild der Marker 16, 16' wird mittels einer Kamera 5 aufgenommen. Aus dem aufgenommenen Bild der Marker 16, 16' ist die Position des Arbeitsgeräts 3 bestimmbar.

Die Methode der "3D-Navigation durch Bilderkennung von Marker-Bildern" ist zur dreidimensionalen Navigation in einem Raum geeignet. Sie kommt zur Anwendung für die absolute, d.h. relativ zur Referenzstation, Navigation in einem Volumen. Die Idee besteht nun darin, daß eine Kamera 5 das Bild beobachtet, welches passive und/oder aktive Marker 16, 16', die am Power-Tool 3 befestigt sind, zeigen. Die Größe des Marker-Bildes erlaubt das Berechnen der Distanz von Kamera 5 zur Marker-Ebene. Die Verzerrung des Marker-Bildes erlaubt die Bestimmung der Lage des Markerbildes bzw. des Power-Tools 3 im Raum.

Aus Fig. 5 geht hervor, daß der Kamera 5 die Abstände und die Lage der Lichtpunkte bzw. Marker 16, 16' am Power-Tool 3 bekannt sind. Ihr Rechner benutzt diese Information, um Distanz und Lage zu berechnen.

Zu beachten ist, daß die Marker 16, 16' Abstände in der Größenordnung von Dezimetern aufweisen sollten. Da dadurch das Gerüst, welches die Marker 16, 16' am Power-Tool 3 trägt, etwas sperrig ist, ist durch entsprechende Anordnung auszuschließen, daß das Arbeiten hierdurch behindert wird.

Bei diesem Verfahren ergeben sich folgende Vorteile:
- Es genügt nur eine Basisstation, welche von der Kamera 5 gebildet ist.
- Für das Verfahren werden lediglich eine einzige Kamera 5 sowie an sich bekannte optische Marker 16, 16' benötigt. Es ist lediglich ein minimaler Geräteaufwand erforderlich.

Wie man anhand der Fig. 1 bis 5 sieht, umfaßt die Vorrichtung zur Durchführung der beschriebenen Verfahren eine optische Strahlung empfangende und/oder sendende optische Einheit. Beispielsweise kann es sich bei dieser Einheit um die Lichtsendestation 14 sowie den Lichtempfänger 15 gemäß Fig. 4 handeln. Diese Einheit erzeugt die Meßwerte zur Lokalisierung des Arbeitsgeräts 3. Weiter weist die Vorrichtung einen Rechner auf, der aus den Meßwerten die Positionsinformationen für das Arbeitsgerät 3 berechnet. Der Rechner kann beispielsweise in der Kamera 5 gemäß Fig. 1 befindlich sein, also extern zum Arbeitsgerät 3 angeordnet sein. Schließlich ist entsprechend Fig. 1 in der Kamera 5 ein Sender 17 sowie im Arbeitsgerät 3 ein Empfänger 18 angeordnet, womit die Positionsinformationen zwischen dem Rechner sowie dem Arbeitsgerät 3 übermittelt werden. Andererseits kann der Rechner entsprechend der Fig.2 auch intern im Arbeitsgerät 3 befindlich sein. Schließlich befinden sich Anzeigeeinheiten 7 am Arbeitsgerät 3, die die Positionsinformationen dem Benutzer zur manuellen Positionsführung anzeigen.

Die Erfindung ist nicht auf die beschriebenen und dargestellten Ausführungsbeispiele beschränkt. Sie umfaßt vielmehr auch alle fachmännischen Weiterbildungen im Rahmen der durch die Patentansprüche definierten Erfindung. So kann die Erfindung nicht nur in feststehenden Gebäuden sondern auch zur Bearbeitung mobiler Werkstücke Verwendung finden.

### Bezugszeichen-Liste:

- 1:: Werkteil / Ebene / Werkfläche / Wand
- 2:: Sollposition
- 3:: Arbeitsgerät / Power-Tool / Bohrmaschine
- 4:: Objekt
- 5,5':: Kamera
- 6:: (elektromagnetisches) Signal
- 7:: Display / Anzeigeeinheit
- 8:: Fadenkreuz / Markierung / Lichtmuster
- 9:: (feste) Referenz / Kreuz / Eichkreuz
- 10:: Struktur
- 11:: Markierung (am Arbeitsgerät) / Marker
- 12:: Basis / Basislinie
- 13:: Lichtstrahl / Laser-Sheet
- 14:: Lichtsendestation / Basisstation
- 15:: Lichtempfänger / Sensor / Reflektorkugel
- 16,16':: Marker (am Arbeitsgerät)
- 17:: Sender
- 18:: Empfänger
- 19:: Sensor

## Patentansprüche

1. Verfahren zum Bearbeiten eines Werkteils (1), wie einer Wand, einer Decke, eines Bodens o. dgl. eines Gebäudes, mittels eines handbewegbaren Arbeitsgeräts (3), insbesondere eines Elektrowerkzeugs, wobei das Arbeitsgerät (3) zu wenigstens einer vorgebbaren Sollposition bewegbar ist, wobei eine im wesentlichen kontinuierliche Positionserkennung mittels optischer Methoden für die jeweilige Ist-Position des Arbeitsgeräts (3) und/oder eines korrespondierend mit dem Arbeitsgerät (3) bewegbaren Objektes (4) vorgenommen wird, und wobei die Positionsinformationen, wie die Koordinaten der jeweiligen ermittelten Ist-Position und/oder Informationen zur Abweichung zwischen Soll- sowie Ist-Position, dem Benutzer am Arbeitsgerät (3) zur manuellen Positionsführung angezeigt werden, **dadurch gekennzeichnet, dass** das Arbeitsgerät (3) als Objekt (4) eine Markierung (8), beispielsweise ein Fadenkreuz, auf das Werkteil (1) projiziert, dass die Position der Markierung (8) zu einer festen Referenz (9) mittels wenigstens einer Kamera (5) aufgenommen wird, und dass das Kamera-Bild mittels eines Rechners ausgewertet wird, wobei die Position der festen Referenz (9) dem Rechner bekannt ist.

2. Verfahren nach Anspruch 1 **dadurch gekennzeichnet, dass** die jeweiligen Positionsinformationen drahtlos zum Arbeitsgerät (3) übermittelt werden.

3. Vorrichtung zur Durchführung des Verfahrens nach einem der vorhergehenden Ansprüche, umfassend eine optische Strahlung empfangende Einheit,
die Messwerte zur Lokalisierung des Arbeitsgeräts (3) erzeugt, einen Rechner, der aus den Messwerten die Positionsinformationen für das Arbeitsgerät (3) berechnet, und eine Anzeigeeinheit (7) am Arbeitsgerät (3), die die Positionsinformationen dem Benutzer zur manuellen Positionsführung anzeigt,
**dadurch gekennzeichnet, dass**
das Arbeitsgerät eine sendende optische Einheit aufweist, die geeignet ist, eine Markierung (8) als Objekt (4), beispielsweise ein Fadenkreuz, auf das Werkteil zu projizieren und
die optische Strahlung empfangande Einheit wenigstens eine Kamera (5) aufweist, die
ist, die Position der Markierung (8) zu einer festen Referenz (9) aufzunehmen, wobei der Rechner das Kamera-Bild auswertet.

4. Vorrichtung nach Anspruch 3, **dadurch gekennzeichnet, dass** der Rechner zur Berechnung der Positionsinformationen im Arbeitsgerät (3) angeordnet ist.

5. Vorrichtung nach Anspruch 3, **dadurch gekennzeichnet, dass** der Rechner zur Berechnung der Positionsinformationen extern zum Arbeitsgerät (3) angeordnet ist, und dass vorzugsweise Sender (17) und/oder Empfänger (18) die Positionsinformationen zwischen dem Rechner sowie dem Arbeitsgerät übermitteln.

## Claims

1. Method for working on a workpiece (1), such as a wall, ceiling, floor or the like of a building, by means of a hand-manoeuvred appliance (3), in particular an electric tool, wherein the appliance (3) can be moved into at least one predeterminable reference position, wherein an essentially continuous position identification is performed by means of optical methods for the respective actual position of the appliance (3) and/or a movable object (4) corresponding with the appliance (3), and wherein the position information, such as the coordinates of the respectively determined actual position and/or information on a deviation between a reference and actual position is displayed to the user on the appliance (3) for manual position guiding, **characterised in that** the appliance (3) as object (4) projects a marking (8), for example a sight mark, onto the workpiece (1), **in that** the position of the marking (8) relative to a fixed reference (9) is recorded by at least one camera (5), and **in that** the camera image is evaluated by means of a computer, the position of the fixed reference (9) being known to the computer.

2. Method according to claim 1 **characterised in that** the respective position information is transmitted wirelessly to the appliance (3).

3. Device for performing the method according to any one of the preceding claims, comprising a unit receiving optical radiation, which generates the measurement values for localising the appliance (3), a computer which calculates position information for the appliance (3) from the measurement values and a display unit (7) on the appliance (3) which displays position information to the user for manual position guiding, **characterised in that**
the appliance comprises a transmitting optical unit which is suitable for projecting a marking (8) as object (4), for example a sight mark, onto the workpiece and
the unit receiving optical radiation comprises at least one camera (5) which is suitable for recording the position of the marking (8) relative to a fixed reference (9), wherein the computer evaluates the camera image.

4. Device according to claim 3, **characterised in that** the computer is arranged for calculating the position information in the appliance (3).

5. Device according to claim 3, **characterised in that** the computer for calculating the position information is arranged externally to the appliance (3), and **in that** preferably transmitters (17) and/or receivers (18) transmit the position information between the computer and the appliance.

## Revendications

1. Procédé d'usinage d'une partie d'ouvrage (1), comme une paroi, un plafond, un sol ou autre d'un bâtiment, à l'aide d'un appareil portatif (3), plus particulièrement d'un outil électrique, moyennant quoi l'appareil (3) est mobile vers au moins une position de consigne prédéfinie, moyennant quoi une détection de position en continu est effectuée à l'aide de procédés optiques pour la position effective de l'appareil (3) et/ou d'un objet (4) mobile de manière correspondante avec l'appareil (3) et moyennant quoi les informations concernant la position ainsi que les coordonnées de la position effective déterminée et/ou les informations concernant l'écart entre la position de consigne et la position effective, sont affichées à l'attention de l'utilisateur sur l'appareil (3) pour un guidage manuel de la position, **caractérisé en ce que** l'appareil (3) en tant qu'objet (4) projette un repère (8), par exemple un réticule, sur la partie d'ouvrage (1), **en ce que** la position du repère (8) est enregistrée à l'aide d'au moins une caméra (5) par rapport à une référence fixe (9), et **en ce que** l'image de la caméra est analysée à l'aide d'un ordinateur, moyennant quoi la position de la référence fixe (9) est connue de l'ordinateur.

2. Procédé selon la revendication 1, **caractérisé en ce que** les informations concernant la position sont transmises sans fil à l'appareil (3).

3. Dispositif de réalisation du procédé selon l'une des revendications précédentes, comprenant une unité recevant un rayonnement optique qui génère des valeurs de mesure pour la localisation de l'appareil (3), un ordinateur qui calcule, à partir des valeurs de mesure les informations concernant la position de l'appareil (3) et une unité d'affichage (7) sur l'appareil (3) qui affiche à l'attention de l'utilisateur les informations concernant la position pour un guidage manuel de la position,
**caractérisé en ce que**
l'appareil comprend une unité optique émettrice conçue pour projeter un repère (8) en tant qu'objet (4), par exemple un réticule, sur la partie d'ouvrage et
l'unité optique recevant un rayonnement optique comprend au moins une caméra (5) conçue pour enregistrer la position du repère (8) par rapport à une référence fixe (9), moyennant quoi l'ordinateur analyse l'image de la caméra.

4. Dispositif selon la revendication 3, **caractérisé en ce que** l'ordinateur de calcul des informations concernant la position se trouve dans l'appareil (3).

5. Dispositif selon la revendication 3, **caractérisé en ce que** l'ordinateur de calcul des informations concernant la position se trouve à l'extérieur de l'appareil (3) et **en ce que** de préférence des émetteurs (17) et/ou des récepteurs (18) transmettent les informations concernant la position entre l'ordinateur et l'appareil.
